(19)

Europäisches
Patentamt
European
Patent Office
Office européen
des brevets

(11)  **EP 2 621 113 A1**

(12)  **EUROPEAN PATENT APPLICATION**

(43) Date of publication:
**31.07.2013 Bulletin 2013/31**

(51) Int Cl.:
**H04B 13/02** *(2006.01)*  **E21B 33/035** *(2006.01)*

(21) Application number: **12152683.4**

(22) Date of filing: **26.01.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Vetco Gray Controls Limited
Bristol BS48 1BS (GB)**

(72) Inventors:
• **Puchianu, Silviu
  Nailsea, Bristol BS48 1BS (GB)**

• **Packham, Andrew
  Nailsea, Bristol BS48 1BS (GB)**
• **Smart, Hilton
  Nailsea, Bristol BS48 1BS (GB)**
• **Morley, Graham
  Nailsea, Bristol BS48 1BS (GB)**
• **Davis, Julian
  Nailsea, Bristol BS48 1BS (GB)**

(74) Representative: **Emerson, Peter James et al
Page Hargrave
Whitefriars
Lewins Mead
Bristol BS1 2NT (GB)**

(54)  **Communicaton in a subsea well control system**

(57)  A communication arrangement for a subsea well control system, comprising an umbilical (6) between a topside location and a subsea location, an electrical conductor (5) in said umbilical and means (1,3,7,9,2,4,8,10) for transmitting and receiving data between said locations via said conductor, wherein a return path for said data comprises the sea.

Fig.1

**Description**

Field of the Invention

This invention relates to communication in a subsea well control system, such as a control system for a subsea well hydrocarbon extraction facility.

Background of the Invention

In a communications and power system (CAPS) based subsea control well system (such as a subsea control system for a subsea well hydrocarbon extraction facility), the cost of the copper conductors, within an umbilical between a surface control platform and the subsea well complex, used for data communications becomes significant due to the long offsets.

Summary of the Invention

According to the invention from one aspect, there is provided a communication arrangement for a subsea well control system, comprising an umbilical between a topside location and a subsea location, an electrical conductor in said umbilical and means for transmitting and receiving data between said locations via said conductor, wherein a return path for said data comprises the sea. Typically, said means for transmitting and receiving data comprises:

    first data supply means, at said topside location;

    second data supply means, at said subsea location;

    first data receiving means, at said topside location, for receiving data from said second data supply means via said umbilical; and

    second data receiving means, at said subsea location, for receiving data from said first data supply means via said umbilical.

Such an arrangement could comprise first switching means, at said topside location, and second switching means, at said subsea location, the arrangement being such that, when said first data supply means transmits data to said second data receiving means, said second switching means connects said conductor to the sea and, when said second data supply means transmits data to said first data receiving means, said first switching means connects said conductor to the sea.
In this case, in one embodiment:

    said first data supply means comprises a first direct current source and means for alternately switching said first switching means between a position in which it connects said first source to said conductor and a position in which it connects said conductor to the sea, in dependence on the data to be transmitted to the second receiving means; and

    said second data supply means comprises a second direct current source and means for alternately switching said second switching means between a position in which it connects said second source to said conductor and a position in which it connects said conductor to the sea, in dependence on the data to be transmitted to the first receiving means.

In another embodiment, said first data supply means comprises a first data source and said second data supply means comprises a second data source, the arrangement being such that said first switching means connects said first source to said conductor for transmitting data to said second receiving means and said second switching means connects said second source to said conductor for transmitting data to said first receiving means. Each of said first and second sources could comprise a source of digital data or a source of modulated analogue data.
According to this invention from another aspect, there is provided a method of communication in a subsea well control system which comprises an umbilical between a topside location and a subsea location and an electrical conductor in said umbilical, the method comprising using means for transmitting and receiving data to transmit between said locations via said conductor and using the sea as a return path for said data.

Brief Description of the Drawings

Figs. 1 and 2 illustrate a first embodiment of the invention in two conditions;

Figs. 3 and 4 illustrate a second embodiment of the invention in two conditions; and

Figs. 5 and 6 illustrate a third embodiment of the invention in two conditions.

Detailed Description of the Invention

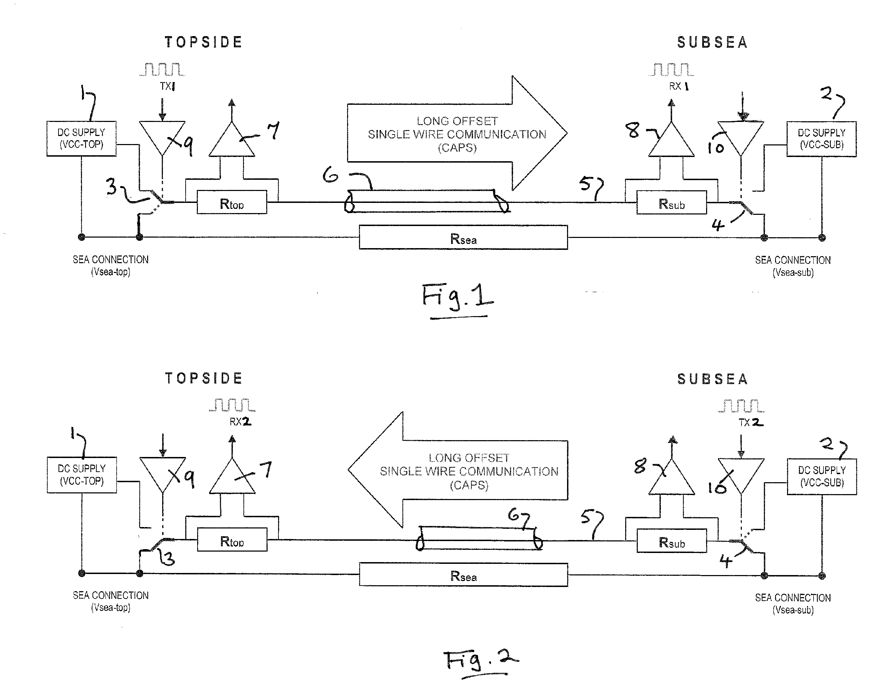

Referring first to Figs. 1 and 2, in a well control system (such as a control system for a subsea well hydrocarbon extraction facility), reference numeral 1 designates a direct current (DC) supply at a topside location for supplying a voltage VCC-TOP and reference numeral 2 designates a DC supply at a subsea location for supplying a voltage VCC-SUB. Reference numeral 3 designates a switch at the topside location and reference numeral 4 designates a switch at the subsea location. There is a long offset between supplies 1 and 2, there being between them an electrical conductor 5 in the form of a single wire in an umbilical 6 for transmitting communications between from the topside to subsea and vice-versa, the conductor 5 not carrying power.

Rtop designates a resistor at the topside location in series with conductor 5, across which resistor is an amplifier 7 for topside reception of data from the subsea location and Rsub designates a resistor at the subsea location in series with conductor 5 across which resistor there is an amplifier 8 for reception of data from the topside location. At the topside location, for transmitting data to the subsea location, a digital signal TX1 can cause switch 3 to operate via an amplifier 9 alternately to connect and disconnect in a predetermined manner the voltage from supply 1 to conductor 5, in which condition switch 4 connects conductor 5 to the sea at a sea connection (see Fig. 1). At the subsea location, for transmitting data to the topside location, a digital signal TX2 can cause switch 4 to operate via an amplifier 10 to alternately connect and disconnect in a predetermined manner the voltage from supply 2 to conductor 5, in which condition switch 3 is connected to the sea at a sea connection (see Fig. 2). At the topside location, the sea connection is at a potential of Vsea-top and at the subsea end the sea connection is at a potential of Vsea-sub.

In Fig. 1, communication of data is from the topside location to the subsea location in dependence on the operation of switch 3 and in Fig. 2, communication of data is from the subsea location to the topside location in dependence on the operation of switch 4, in each case the communication return path is via the sea, the resistance of the sea water being Rsea.

When transmitting data from the topside location to the subsea location (Fig. 1), the received signal being RX1, VCC-TOP must be large enough to compensate for the voltage drop along the conductor 5 of the umbilical 6 (Vumbilical-drop).

e.g.

$$VCC\text{-}TOP = Vumbilical\text{-}drop + V\,digital\text{-}offset,$$

where:

$$Vdigital\text{-}offset = Min\,[Abs(Vsea\text{-}top - Vsea\text{-}sub\,) + Vdigital]$$

Vdigital is recommended to be at least 24 volts.

Thus, the subsea transmitted signal is as follows:

- Logic 1: voltage drop across resistor Rsub when switch 3 is connected to supply 1 (approx Vdigital)

- Logic 0: voltage drop across resistor Rsub when switch 3 is connected to the sea (approx 0 volts)

When transmitting data from the subsea location to the topside location (Fig. 2), the received signal being RX2, similar conditions as per the above supply to VCC-SUB.

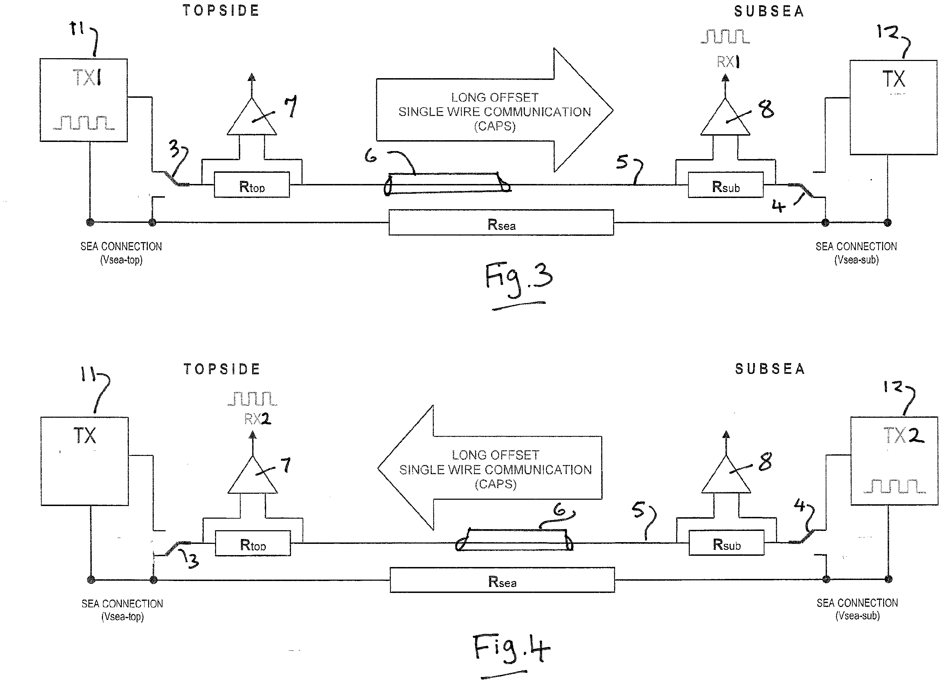

Referring to Figs. 3 and 4, in which items which correspond with those in Figs. 1 and 2 have the same reference numerals as in Figs. 1 and 2, reference numerals 11 and 12 designate digital data supplies at the topside and subsea locations respectively. For transmitting data from the topside location to the subsea location, switch 3 is connected to supply 1 and switch 4 is connected to the sea (Fig. 3); and for transmitting data from the subsea location to the topside location, switch 4 is connected to supply 2 and switch 3 is connected to the sea (Fig. 4).

As with Figs. 1 and 2, the communication of data from the topside location to the subsea location and vice-versa is via conductor 5 with the return path via the sea. The DC level of the digital signals supplied by supplies 11 and 12 should meet the conditions set out above with reference to Figs. 1 and 2 for VCC-TOP and VCC-SUB.

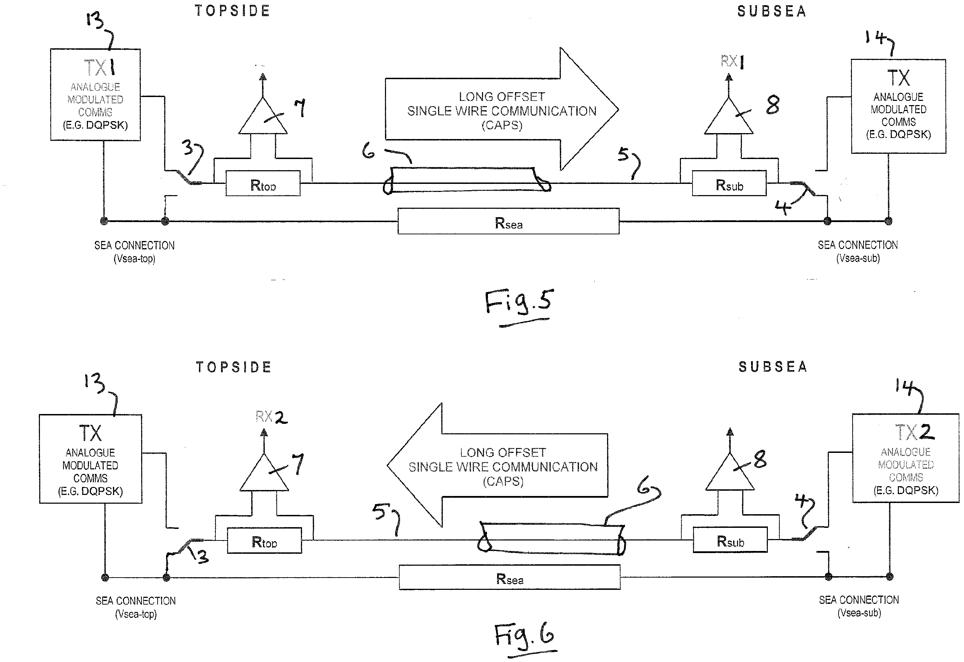

Figs. 5 and 6 illustrate an alternative to the embodiment of Figs. 3 and 4 in which supplies 11 and 12 are replaced by analogue modulated communication supplies 13 and 14 at the topside and subsea locations respectively, for example supplying analogue signals digitally encoded, such as by differential quadrature phase shift keying (DQSPK).

<u>Advantages of using the Invention</u>

The key advantage of this invention is the substantial reduction in the umbilical costs by the reduction of conductors.

## Claims

1.  A communication arrangement for a subsea well control system, comprising an umbilical between a topside location and a subsea location, an electrical conductor in said umbilical and means for transmitting and receiving data between said locations via said conductor, wherein a return path for said data comprises the sea.

2.  An arrangement according to claim 1, wherein said means for transmitting and receiving data comprises:

    first data supply means, at said topside location;
    second data supply means, at said subsea location;
    first data receiving means, at said topside location, for receiving data from said second data supply means via said umbilical; and
    second data receiving means, at said subsea location, for receiving data from said first data supply means via said umbilical.

3.  An arrangement according to claim 2, comprising first switching means, at said topside location, and second switching means, at said subsea location, the arrangement being such that, when said first data supply means transmits data to said second data receiving means, said second switching means connects said conductor to the sea and, when said second data supply means transmits data to said first data receiving means, said first switching means connects said conductor to the sea.

4.  An arrangement according to claim 3, wherein:

    said first data supply means comprises a first direct current source and means for alternately switching said first switching means between a position in which it connects said first source to said conductor and a position in which it connects said conductor to the sea, in dependence on the data to be transmitted to the second receiving means; and
    said second data supply means comprises a second direct current source and means for alternately switching said second switching means between a position in which it connects said second source to said conductor and a position in which it connects said conductor to the sea, in dependence on the data to be transmitted to the first receiving means.

5.  An arrangement according to claim 3, wherein said first data supply means comprises a first data source and said second data supply means comprises a second data source, the arrangement being such that said first switching means connects said first source to said conductor for transmitting data to said second receiving means and said second switching means connects said second source to said conductor for transmitting data to said first receiving means.

6.  An arrangement according to claim 5, wherein each of said first and second sources comprises a source of digital data.

7.  An arrangement according to claim 5, wherein each of said first and second sources comprises a source of modulated analogue data.

8. A method of communication in a subsea well control system which comprises an umbilical between a topside location and a subsea location and an electrical conductor in said umbilical, the method comprising using means for transmitting and receiving data to transmit between said locations via said conductor and using the sea as a return path for said data.

9. A method according to claim 8, wherein said means for transmitting and receiving data comprises:

first data supply means, at said topside location;
second data supply means, at said subsea location;
first data receiving means, at said topside location, for receiving data from said second data supply means via said umbilical; and
second data receiving means, at said subsea location, for receiving data from said first data supply means via said umbilical.

10. A method according to claim 9, wherein the system comprises first switching means, at said topside location, and second switching means, at said subsea location, the method being such that, when said first data supply means transmits data to said second data receiving means, said second switching means connects said conductor to the sea and, when said second data supply means transmits data to said first data receiving means, said first switching means connects said conductor to the sea.

11. A method according to claim 10, wherein:

said first data supply means comprises a first direct current source, the method comprising alternately switching said first switching means between a position in which it connects said first source to said conductor and a position in which it connects said conductor to the sea, in dependence on the data to be transmitted to the second receiving means; and
said second data supply means comprises a second direct current source, the method comprising alternately switching said second switching means between a position in which it connects said second source to said conductor and a position in which it connects said conductor to the sea, in dependence on the data to be transmitted to the first receiving means.

12. A method according to claim 10, wherein said first data supply means comprises a first data source and said second data supply means comprises a second data source, the method being such that said first switching means connects said first source to said conductor for transmitting data to said second receiving means and said second switching means connects said second source to said conductor for transmitting data to said first receiving means.

13. A method according to claim 12, wherein each of said first and second sources comprises a source of digital data.

14. A method according to claim 12, wherein each of said first and second sources comprises a source of modulated analogue data.

TOPSIDE

TXI

SUBSEA

RX 1

DC SUPPLY
(VCC-TOP)

LONG OFFSET
SINGLE WIRE COMMUNICATION
(CAPS)

DC SUPPLY
(VCC-SUB)

Rtop

Rsub

Rsea

SEA CONNECTION
(Vsea-top)

SEA CONNECTION
(Vsea-sub)

Fig.1

TOPSIDE

RX2

SUBSEA

TX2

DC SUPPLY
(VCC-TOP)

LONG OFFSET
SINGLE WIRE COMMUNICATION
(CAPS)

DC SUPPLY
(VCC-SUB)

Rtop

Rsub

Rsea

SEA CONNECTION
(Vsea-top)

SEA CONNECTION
(Vsea-sub)

Fig.2

EP 2 621 113 A1

TOPSIDE

SUBSEA

11

TX1

12

TX

7

8
RX1

LONG OFFSET
SINGLE WIRE COMMUNICATION
(CAPS)

3

6

5

4

$R_{top}$

$R_{sub}$

$R_{sea}$

SEA CONNECTION
(Vsea-top)

SEA CONNECTION
(Vsea-sub)

Fig.3

TOPSIDE

SUBSEA

11

TX

12

TX2

7
RX2

8

LONG OFFSET
SINGLE WIRE COMMUNICATION
(CAPS)

3

6

5

4

$R_{top}$

$R_{sub}$

$R_{sea}$

SEA CONNECTION
(Vsea-top)

SEA CONNECTION
(Vsea-sub)

Fig.4

Fig.5

Fig.6

Europäisches
Patentamt
European
Patent Office
Office européen
des brevets

**EUROPEAN SEARCH REPORT**

Application Number

EP 12 15 2683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 458 460 A (SCHLUMBERGER HOLDINGS [VG]) 23 September 2009 (2009-09-23) | 1-5,8-12 | INV. H04B13/02 E21B33/035 |
| Y | * paragraphs [0003], [0016]; figures 3,6 * | 6,7,13, 14 | |
| Y | WO 2008/011889 A1 (SIEMENS AG [DE]; BREKKE ENDRE [NO]; HORTEN VEGARD [NO]; STEIGEN VIDAR) 31 January 2008 (2008-01-31) * page 5, line 36 - page 7, line 35; figure 1 * | 6,7,13, 14 | |
| A | EP 2 221 449 A2 (VETCO GRAY CONTROLS LTD [GB]) 25 August 2010 (2010-08-25) * paragraphs [0004], [0011]; figure 1 * | 1-14 | |
| A | WO 93/26115 A2 (FLIGHT REFUELING LTD [GB]; DICKIE NEIL MARSHALL [GB]; HUDSON STEVEN MA) 23 December 1993 (1993-12-23) * page 13, lines 17-34; figure 3 * * page 28, lines 16-35 * | 1-14 | |

| | | | TECHNICAL FIELDS SEARCHED (IPC) |
|---|---|---|---|
| | | | H04B E21B |

The present search report has been drawn up for all claims

| Place of search | Date of completion of the search | Examiner |
|---|---|---|
| Munich | 3 July 2012 | De Vries, Jane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 2 621 113 A1

## ANNEX TO THE EUROPEAN SEARCH REPORT
## ON EUROPEAN PATENT APPLICATION NO.

EP 12 15 2683

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2012

| Patent document cited in search report | | Publication date | Patent family member(s) | | Publication date |
|---|---|---|---|---|---|
| GB 2458460 | A | 23-09-2009 | GB | 2458460 A | 23-09-2009 |
| | | | WO | 2009115798 A1 | 24-09-2009 |
| WO 2008011889 | A1 | 31-01-2008 | BR | PI0621891 A2 | 20-12-2011 |
| | | | CN | 101502017 A | 05-08-2009 |
| | | | EP | 2044696 A1 | 08-04-2009 |
| | | | RU | 2009106076 A | 27-08-2010 |
| | | | US | 2010284453 A1 | 11-11-2010 |
| | | | WO | 2008011889 A1 | 31-01-2008 |
| EP 2221449 | A2 | 25-08-2010 | AU | 2010200561 A1 | 02-09-2010 |
| | | | BR | PI1000356 A2 | 22-03-2011 |
| | | | EP | 2221449 A2 | 25-08-2010 |
| | | | GB | 2468117 A | 01-09-2010 |
| | | | SG | 164315 A1 | 29-09-2010 |
| | | | US | 2010207783 A1 | 19-08-2010 |
| WO 9326115 | A2 | 23-12-1993 | AT | 180129 T | 15-05-1999 |
| | | | AU | 4347493 A | 04-01-1994 |
| | | | CA | 2138147 A1 | 23-12-1993 |
| | | | DE | 69324919 D1 | 17-06-1999 |
| | | | DE | 69324919 T2 | 13-01-2000 |
| | | | EP | 0646304 A1 | 05-04-1995 |
| | | | ES | 2131112 T3 | 16-07-1999 |
| | | | NO | 944837 A | 14-02-1995 |
| | | | US | 5587707 A | 24-12-1996 |
| | | | WO | 9326115 A2 | 23-12-1993 |

EPO FORM P0459

For more details about this annex : see Official Journal of the European Patent Office, No. 12/82